# EUROPÄISCHE PATENTSCHRIFT

(11) **EP 3 545 267 B1**
(45) Veröffentlichungstag und Bekanntmachung des Hinweises auf die Patenterteilung: **15.06.2022**
(21) Anmeldenummer: 17790705.2
(22) Anmeldetag: 11.10.2017
(51) Int. Cl.: G01F 1/00, G01F 15/06, G01F 23/00, H01R 13/66, H01R 103/00, G01D 21/00

(54) **KOMMUNIKATIONS-ADAPTER FÜR EINEN TRANSMITTER EINES FELDGERÄTS**
COMMUNICATION ADAPTER FOR A TRANSMITTER OF A FIELD DEVICE
ADAPTATEUR DE COMMUNICATION POUR UN ÉMETTEUR D'UN APPAREIL DE TERRAIN

(30) Priorität: 24.11.2016 DE 102016122714
(43) Veröffentlichungstag der Anmeldung: 02.10.2019
(73) Patentinhaber: Endress+Hauser Wetzer GmbH+Co. KG, 87484 Nesselwang (DE)
(72) Erfinder: KORN, Michael, 87616 Marktoberdorf (DE); HÄRLE, Thomas, 87466 Oy-Mittelberg (DE); JÖGEL, Thomas, 87509 Immenstadt (DE); WARNKING, Michael, 87497 Wertach (DE); ZELLER, Robert, 86983 Lechbruck (DE)
(74) Vertreter: Andres, Angelika Maria
(86) Internationale Anmeldenummer: PCT/EP2017/075923
(87) Internationale Veröffentlichungsnummer: WO 2018/095648

(56) Entgegenhaltungen:
- WO-A1-2009/040191
- WO-A2-2006/106055
- DE-A1-102006 051 900
- DE-A1-102013 103 212
- US-A1- 2004 177 703
- US-A1- 2014 170 989
- US-A1- 2015 002 185

## Beschreibung

Die Erfindung betrifft einen Adapter für einen Transmitters eines Feldgeräts. Der Adapter dient der, insbesondere drahtlosen, Kommunikation des Transmitters mit einer externen Einheit. Ferner betrifft die Erfindung einen Transmitter für ein 2-Draht-Feldgerät, insbesondere der Prozess- und/oder Automatisierungstechnik, welcher Transmitter der Bestimmung und/oder Überwachung zumindest einer Prozessgröße dient, und welcher Transmitter einen erfindungsgemäßen Adapter umfasst.

Feldgeräte zur Bestimmung, Überwachung und/oder Beeinflussung verschiedener Prozessgrößen werden vielfach in der Prozess- und/oder Automatisierungstechnik eingesetzt. Beispiele für derartige Feldgeräte sind Füllstandsmessgeräte, Durchflussmessgeräte, Druck- und Temperaturmessgeräte, pH- und/oder pH-Redoxpotentialmessgeräte, oder auch Leitfähigkeitsmessgeräte, welche der Erfassung der jeweils entsprechenden Prozessgrößen, wie einem Füllstand, einem Durchfluss, dem Druck, der Temperatur, einem pH-Wert, eines Redoxpotentials, oder einer Leitfähigkeit dienen. Die jeweils zugrunde liegenden Messprinzipien sind aus dem Stand der Technik hinlänglich bekannt, und werden an dieser Stelle nicht einzeln angeführt. Bei Durchflussmessgeräten handelt es sich insbesondere um Coriolis-, Ultraschall-, Vortex-, thermische und/oder magnetisch induktiven Durchflussmessgeräte. Füllstandsmessgeräte wiederum sind insbesondere Mikrowellen-Füllstandsmessgeräte, Ultraschall-Füllstandsmessgeräte, zeitbereichsreflektometrische Füllstandsmessgeräte (TDR), radiometrische Füllstandsmessgeräte, kapazitive Füllstandsmessgeräte, konduktive Füllstandsmessgeräte und/oder temperatursensitive Füllstandsmessgeräte. Bei Druckmessgeräte dagegen handelt es sich bevorzugt um sogenannte Absolut-, Relativ- oder Differenzdruckgeräte, während Temperaturmessgeräte häufig Thermoelemente oder temperaturabhängige Widerstände zur Ermittlung der Temperatur aufweisen.

Im Rahmen der vorliegenden Anmeldung werden im Prinzip alle Geräte als Feldgerät bezeichnet, die auf Feldebene angeordnet sind, also im Prinzip prozessnah eingesetzt werden und prozessrelevante Informationen liefern oder verarbeiten. Neben Sensoren und Aktoren werden als Feldgeräte allgemein auch solche Einheiten bezeichnet, die direkt an einem Feldbus angeschlossen sind, und zur Kommunikation mit einer Steuerstelle wie einem Leitsystem dienen, wie z.B. Remote I/Os, Gateways, Linking Devices und Wireless Adapter bzw. Funkadapter. Eine Vielzahl solcher Feldgeräte wird von Firmen der Endress + Hauser-Gruppe hergestellt und vertrieben.

Feldgeräte verfügen vielfach über Mittel zur Anzeige und/oder Übertragung von Informationen bzw. Daten, wie beispielsweise von Betriebszuständen, Messwerten, Geräteparametern oder ähnlichem. Während im Falle von Informationsanzeigen, wie beispielsweise Displays, oder auch optische oder akustische Anzeigeelemente, die Informationen im Wesentlichen lokal am Ort des Feldgeräts verfügbar sind, erlauben verschiedenste Kommunikationsmittel die Übertragung von Informationen an andere Feldgeräten, oder auch an eine übergeordnete Einheit, wie beispielsweise eine Leitstelle. In dieser Hinsicht sind eine Vielzahl drahtgebundener sowie drahtloser Standards und Technogien aus dem Stand der Technik bekannt. Es gibt hierbei jedoch zunehmend ein Bestreben, auf drahtgebundene Datenübertragungseinheiten zu verzichten. Hierdurch können im Industriebereich beispielsweise Kosten für eine Verkabelung reduziert werden, was dazu führt, dass die Gebrauchstauglichkeit verbessert und damit ein Nutzen für den Anwender generiert werden kann. Außerdem ermöglicht eine drahtlose Datenübertragung eine deutlich einfachere Handhabung, insbesondere in Bezug auf Parametrierungen von Feldgeräten, welche beispielsweise bei der Inbetriebnahme durchgeführt werden.

Zur Energieversorgung eines Feldgeräts kommt vielfach die sogenannte Zweidrahttechnik, oder auch Zweileitertechnik genannt, zum Einsatz, bei welcher ein Feldgerät über ein einziges Leitungspaar an eine Leitstelle angeschlossen wird. Es erfolgt also sowohl die Energieversorgung, insbesondere in Form eines Versorgungsstroms, als auch eine Daten- bzw. Informationsübertragung über das gemeinsame Leitungspaar. Dabei wird ein erster Draht bzw. eine erste Leitung für den Hinweg, und ein zweiter Draht bzw. eine zweite Leitung für den Rückweg genutzt. Der über die Zweidrahtleitung zur Verfügung gestellte Versorgungsstrom bzw. die entsprechende elektrische Leistung muss vom jeweiligen Feldgerät geeignet verwaltet und auf die einzelnen Komponenten des Feldgeräts aufgeteilt werden. Zweidrahtleitungen sind ferner häufig für 4-20mA Schnittstellen ausgelegt. Dies hat zur Folge, dass den jeweiligen Feldgeräten nur eine sehr begrenzte Leistungsaufnahme zur Verfügung steht. Soll das Feldgerät neben einer Messwerterfassung noch über weitere Funktionen, wie beispielsweise einer Funktion zur drahtlosen Kommunikation, verfügen, stellt dies höchste Anforderungen an die Konzeption und den Aufbau des Gerätes.

Eine Lösung, welche aus der US 7,262,693 bekannt geworden ist, beinhaltet die Integration eines oder mehrerer Kondensatoren zum Zweck der Zwischenspeicherung von Energie aus der Zweidrahtleitung bzw. aus dem Zweileiterfeldbus in das Feldgerät. Die mittels des Kondensators/der Kondensatoren zwischengespeicherte Energie wird dann einem Drahtlosmodul, welches zur Übertragung von Daten und/oder Information das temporär eine große Leistung bzw. Energie benötigt, zur Verfügung gestellt. Sowohl der Kondensator als auch das Drahtlosmodul werden dabei direkt aus der Zweidrahtleitung gespeist. Das Feldgerät muss also von vornherein passend konzipiert sein.

In WO2009/040191A1 ist eine Möglichkeit zur drahtlosen Datenübertragung mittels eines Wireless Adapters, ohne Strombegrenzung, welcher über eine Feldbus-Kommunikationsschnittstelle mit elektrischer Leistung versorgt wird, beschrieben.

DE102006051900A1 offenbart ein Feldgerät mit zwei Elektronikeinheiten sowie einer Übertragungseinheit, die elektrische Energie und Daten zwischen den beiden Elektronikeinheiten überträgt.

Aus der US2015/002185A1 ist eine drahtlose Feldgeräteanordnung mit einem Sensor, einem Gehäuse, einem Transmitter und einem Leistungsmodul bekannt geworden. Das Leistungsmodul hat eine Energiespeichereinheit, eine Verbindung zu einer lokalen Energieversorgung und einen Prozessor, welcher so ausgestaltet ist, dass er dem Transmitter einen Diagnosereport bezüglich der Energiespeichereinheit übermittelt.

Die WO2006/106055A2 offenbart ein Messumformerspeisegerät zur Energieversorgung und Weiterleitung von Stromsignalen zwischen dem Messumformer und einer übergeordneten Einheit mit einer zusätzlichen Signalisierungseinrichtung zur Signalisierung von Zusatzinformationen.

DE102016103212A1 beschreibt ein System zur Bestimmung, Überwachung und/oder Beeinflussung einer Prozessgröße mit einer Mess-/Stelleinheit die über einen ersten Bus mit einer zentralen Sensoreinheit verbunden ist, wobei über den Bus Daten und/oder Energie austauschbar ist/sind, und wobei die Sensoreinheit mittels eines I/O-Moduls an einen von einer Steuereinheit ausgehenden zweiten Bus anschließbar ist.

Aus US2014/170989A1 ist ein Funkmodul für ein Feldgerät bekannt geoworden, das eine Schnittstelle zur Energie- und Datenübertragung mit dem Feldgerät aufweist. Über diese Schnittstelle kann sowohl die Übertragung von Steuersignalen an das Feldgerät, die Übertragung von Prozessdaten vom Feldgerät an eine übergeordnete Einheit, als auch die Energieversorgung des Feldgeräts erfolgen. Mithilfe eines Ablaufplans, welcher die Steuersignale enthält, soll die Leistungsaufnahme des Feldgeräts gesteuert und hinsichtlich seines Energieverbrauchs optimiert werden. Der Erfindung liegt die Aufgabe zugrunde, eine Möglichkeit bereitzustellen, ein Zweidraht-Feldgerät auf möglichst einfache Art und Weise mit einem Drahtlosmodul zur Kommunikation auszustatten.

Diese Aufgabe wird durch den Adapter nach Anspruch 1, durch den Transmitter nach Anspruch 6, sowie durch ein Feldgerät nach Anspruch 7 gelöst.

Hinsichtlich des Adapters wird die der Erfindung zugrunde liegende Aufgabe gelöst durch einen Adapter für ein 2-Draht-Feldgerät, insbesondere der Prozess und/oder Automatisierungstechnik. Der Adapter umfasst dabei zumindest eine Kommunikationseinheit zur drahtlosen, insbesondere bidirektionalen Kommunikation mit einer externen Einheit, und eine Energiespeicher-Einheit zur Versorgung zumindest der Kommunikationseinheit mittels elektrischer Energie. Ferner umfasst der Adapter erfindungsgemäß zumindest ein erstes, bidirektionales Anschlusselement zur elektrischen Kontaktierung des Adapters mit einem zweiten, zu dem ersten Anschlusselement komplementären, bidirektionalen Anschlusselement des Feldgeräts, wobei die zumindest zwei Anschlusselemente zur bidirektionalen Versorgung zumindest des Adapters mit elektrischer Energie und zum Austausch von Informationen bzw. Daten ausgestaltet sind. Bei den beiden Anschlusselementen handelt es sich um zueinander komplementäre serielle Schnittstellen. Die beiden Anschlusselemente sind dazu ausgestaltet, die Versorgung zumindest des Adapters mit elektrischer Energie und den Austausch von Informationen getrennt voneinander durchzuführen, wobei die Anschlusselemente zumindest zwei Kontaktelemente aufweisen, wobei ein erstes Kontaktelement für die Energieversorgung und zumindest ein zweites Kontaktelement für den Austausch von Informationen dient.

Bei dem Feldgerät handelt es sich beispielsweise um ein Messgerät mit einer Sensoreinheit und einer Elektronikeinheit, welches der Bestimmung und/oder Überwachung zumindest einer Prozessgröße eines Mediums in einem Behältnis dient.

Der Adapter wird erfindungsgemäß also nicht unmittelbar an die Prozessschleife angeschlossen, sondern an ein Anschlusselement des Feldgeräts. Dieses Anschlusselement ist bevorzugt in einer Elektronikeinheit, insbesondere in einem Transmitter des Feldgeräts angeordnet. Das Feldgerät muss also vorteilhaft lediglich über ein geeignetes Anschlusselement verfügen. Sowohl die Energieversorgung des Adapters als auch eine Übertragung von Daten bzw. Informationen zwischen dem Feldgerät und dem Adapter erfolgt über das Anschlusselement des Feldgeräts und das Anschlusselement des Adapters, z. B. jeweils in Form elektrischer Signale.

In einer Ausgestaltung umfasst der Adapter eine Einheit zur Strom- und/oder Spannungsbegrenzung. Diese Einheit ist insbesondere derart ausgestaltet, dass sie eine Verwendung des Feldgeräts in explosionsgefährdeter Atmosphäre ermöglicht. Die Anschlusselemente sind erfindungsgemäß derart ausgestaltet, dass die Versorgung mit elektrischer Energie und/oder der Austausch von Informationen bidirektional durchführbar ist/sind. Es kann also nicht nur der Adapter über das Feldgerät mittels elektrischer Energie versorgt werden. Vielmehr kann ebenfalls das Feldgerät über den Adapter mittels elektrischer Energie versorgt werden. Das gleiche gilt für den Austausch von Informationen, welche sowohl vom Adapter zum Feldgerät als auch vom Feldgerät zum Adapter übertragen werden können. Es handelt sich also im Wesentlichen um bidirektionale Anschlusselemente, wobei die Energieversorgung und/oder eine Übertragung von Daten bzw. Informationen bidirektional durchgeführt werden kann/können.

In einer weiteren bevorzugten Ausgestaltung handelt es sich bei der seriellen Schnittstelle um eine CDI, UART, i2C oder SPI- Schnittstelle.

Eine Ausgestaltung beinhaltet, dass die Kommunikationseinheit eine Einheit zur drahtlosen Signalübertragung, insbesondere ein Bluetooth-Modul, umfasst. Es sei darauf verwiesen, dass viele weitere Technologien zur drahtlosen Datenübertragung hinlänglich aus dem Stand der Technik bekannt sind, und gleichermaßen unter die vorliegende Erfindung fallen.

Erfindungsgemäß umfasst der Adapter eine Recheneinheit, welche zumindest dazu ausgestaltet ist, die Versorgung der Kommunikationseinheit mit elektrischer Energie über die Anschlusselemente und/oder über die Energiespeicher-Einheit zu steuern. Die Recheneinheit kann ferner der Verarbeitung, Aufbereitung, Wandlung und/oder Weiterleitung von jeweils Daten bzw. Informationen enthaltenden Signalen von der Kommunikationseinheit und/oder dem Feldgerät dienen. Dabei kann die Recheneinheit einerseits über die Anschlusselemente, und damit über das Feldgerät, oder auch über die Energiespeicher-Einheit mittels elektrischer Energie versorgt werden.

In einer Ausgestaltung umfasst der Adapter eine Batterie, welche der Energieversorgung zumindest der Kommunikationseinheit und/oder der Recheneinheit mit elektrischer Energie dient. Die Batterie stellt eine zusätzliche Energiequelle zur Energiespeicher-Einheit und der aus der Prozessschleife bezogenen Energie da.

Die erfindungsgemäße Aufgabe wird außerdem gelöst durch einen Transmitter für ein 2-Draht-Feldgerät, insbesondere der Prozess und/oder Automatisierungstechnik, welcher Transmitter der Bestimmung und/oder Überwachung zumindest einer Prozessgröße eines Mediums dient, und welcher Transmitter einen erfindungsgemäßen Adapter aufweist. Der Adapter kann einerseits lösbar innerhalb des Transmitters angeordnet sein. Andererseits kann er auch fester Bestandteil des Transmitters ausgeführt sein. Für die beiden Ausgestaltungen sind keine nennenswerten baulichen Modifikationen des Transmitters notwendig, da der Adapter in beiden Fällen mittels der beiden Anschlusselemente, insbesondere elektrisch, kontaktiert wird.

Schließlich wird die erfindungsgemäße Aufgabe gelöst durch ein 2-Draht-Feldgerät, insbesondere der Prozess und/oder Automatisierungstechnik, umfassend einen erfindungsgemäßen Adapter oder einen erfindungsgemäßen Transmitter.

Die in Bezug auf den Adapter beschriebenen Ausgestaltungen finden mutatis mutandis Anwendung auf den erfindungsgemäßen Transmitter und das erfindungsgemäße Feldgerät.

Die Erfindung wird anhand der nachfolgenden Figuren näherer erläutert. Es zeigt:
Fig. 1: eine schematische Zeichnung eines Feldgeräts mit einem Transmitter und einem erfindungsgemäßen Adapter in einer ersten Ausgestaltung der Erfindung, und
Fig. 2 eine schematische Zeichnung eines Feldgeräts mit einem Transmitter und einem erfindungsgemäßen Adapter in einer zweiten Ausgestaltung.

In den Figuren sind gleiche Elemente mit gleichen Bezugszeichen gekennzeichnet.

Die nachfolgende Beschreibung bezieht sich ohne Beschränkung der Allgemeinheit auf ein Feldgerät in Form eines Messgeräts 1 mit einer Sensoreinheit 2 und einem Transmitter 3, über welchen Transmitter 3 das Messgerät 1 mit einem Leitsystem 4 verbunden ist. Das Messgerät 1 ist als 2-Draht-Feldgerät ausgestaltet und an eine 2-Draht Prozessschleife 5 anschließbar.

Die Kommunikation zum Leitsystem 5 erfolgt entsprechend über einen Zweileiterbus 5, etwa über HART, PROFIBUS PA oder FOUNDATION Fieldbus. Es ist auch möglich, die Anbindung an den Bus zusätzlich oder alternativ als drahtlose Schnittstelle auszugestalten, etwa nach dem WirelessHART Standard, wobei über WirelessHART eine Anbindung direkt an ein Leitsystem 4 via einem Gateway bereitstellbar ist. Darüber hinaus ist optional oder zusätzlich im Falle des HART-Protokolls eine 4..20 mA Schnittstelle implementierbar.

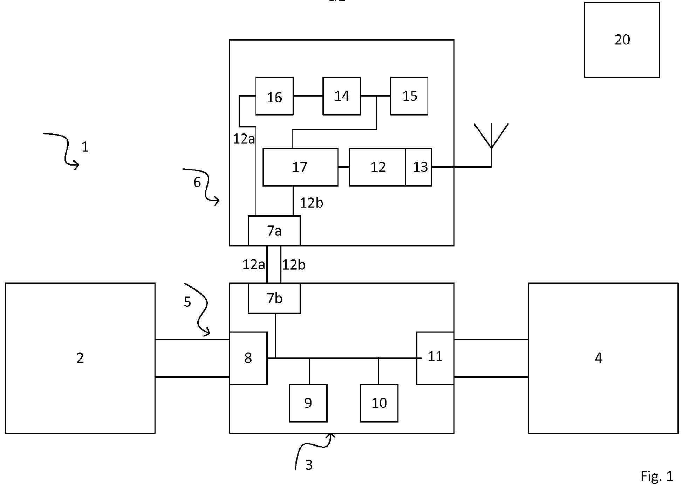

In Fig. 1 ist eine erste Ausgestaltung eines erfindungsgemäßen Adapters 6 gezeigt. Der Adapter 6 verfügt über ein erstes Anschlusselement 7a, mittels welchem er mit einem zweiten zu dem ersten Anschlusselement 7a komplementären Anschlusselement 7b, insbesondere lösbar, verbindbar ist. Es sei darauf verwiesen, dass für andere, hier nicht gezeigte, Ausgestaltungen das zweite Anschlusselement 7b auch Bestandteil einer anderen Komponente des Feldgeräts 1 sein kann. Auch sind Feldgeräte 1 bekannt, bei welchen der Transmitter 3 und die Sensoreinheit 2 einstückig ausgeführt sind.

Die Funktionsweise eines Transmitters 3 ist an sich hinlänglich aus dem Stand der Technik bekannt und wird deswegen an dieser Stelle nicht detailliert beschrieben. Der Transmitter 3 gemäß Fig. 1 verfügt beispielsweise über einen Analog-DigitalWandler 8, mittels welchem ein von der Sensoreinheit 2 empfangenes Messsignal digitalisiert wird. Als weitere Komponenten zur Signalverarbeitung umfasst der Transmitter 3 eine Recheneinheit 9, beispielweise ein Controller, und einen DC-DC-Wandler 10, sowie eine Regeleinheit 11, insbesondere zur Regelung eines elektrischen Stroms.

Bei den Anschlusselementen 7a,7b handelt es sich bevorzugt jeweils um zueinander, insbesondere komplementäre, Schnittstellen. Bevorzugt handelt es sich um serielle Schnittstellen, wie beispielsweise eine CDI, UART, i2C oder SPI-Schnittstelle. Den Schnittstellen 7a,7b sind zumindest zwei zueinander komplementäre Kontaktierungselemente 12a,12b zugeordnet, von denen ein erstes Kontaktierungselement 12a zur Energieversorgung des Adapters 6 mittels elektrischer Energie, und ein zweites Kontaktierungselement 12b zum Austausch von Information bzw. Daten zwischen dem Adapter 6 und dem Transmitter 3, bevorzugt in Form elektrische Signale, dient. Es versteht sich von selbst, dass die Anschlusselemente 7a, 7b aber auch mehr als zwei Kontaktelemente 12a,12b aufweisen können.

Der Adapter 6 verfügt über eine Kommunikationseinheit 13 mit einer Einheit zur drahtlosen Signalübertragung 14, welche für die hier gezeigte Ausgestaltung durch ein Bluetooth-Modul gegeben ist. Das Bluetooth-Modul ist bevorzugt derart ausgestaltet, dass es dem Protokollstapel Low Energy als "Bluetooth Low Energy" (auch als BTLE, BLE, oder Bluetooth Smart bekannt) oder zumindest dem Standard "Bluetooth 4.0" genügt. Über den Adapter 6, bzw. über die Kommunikationseinheit des Adapters 6 kann das Feldgerät mit einer externen Einheit 20, beispielsweise mit einer Leitstelle 4, einer externen Einheit 20, beispielsweise ein fest installiertes Gerät, wie ein Computer, oder eine mobile Einheit, wie z. B. ein Mobiltelefon, Tablet oder Notebook, oder auch mit einem externen Modul, wie beispielsweise einer Anzeige oder einem Diagnosemodul, kommunizieren.

Das Feldgerät 1, bzw. dessen jeweils relevante Komponenten, können mittels des Adapters 6 sowohl zur unidirektionalen als auch zur bidirektionalen Kommunikation mit der externen Einheit 20 ausgestaltet sein. Dies betrifft sowohl die Energieversorgung als auch die Übertragung von Informationen. Bei den Informationen handelt es sich beispielsweise um Daten bezüglich einer Parametrierung des Feldgeräts 1, welche von der externen Einheit 20 an das Feldgerät 1 gesendet werden, oder auch um mittels des Feldgeräts 1 ermittelte Messwerte, welche vom Feldgerät 1 an die externe Einheit 20 übertragen werden. Zur Energieversorgung umfasst der Adapter eine Energiespeicher-Einheit 15, welche zumindest die Kommunikationseinheit 13 mit elektrischer Energie versorgt. Zur drahtlosen Übertragung von Informationen hat die Kommunikationseinheit 13 temporär einen erhöhten Energiebedarf, welcher durch die Zweidraht-Prozessschleife 5 üblicherweise nicht gedeckt werden kann. Bei der Energiespeichereinheit 15 handelt es sich bevorzugt um einen Kondensator oder um einen Superkondensator. Im fortlaufenden Betrieb wird überschüssige Energie aus der Prozessleitschleife über die Anschlusselemente 7a,7b in der Energiespeicher-Einheit 15 zwischengespeichert, die dann auf Bedarf den einzelnen Komponenten des Adapters 6, insbesondere der Kommunikationseinheit 13 zur Verfügung gestellt wird.

Optional kann zusätzlich eine Batterie 16 vorgesehen werden, welche beispielsweise, aber nicht zwingend, ebenfalls der Energiespeicher-Einheit 15 zugeordnet werden kann. Diese stellt auf Bedarf zusätzliche Energie zu der über die Prozessschleife 5 eingespeisten Energie zur Verfügung.

Ebenfalls optional ist die Integration einer Einheit zur Strom- und/oder Spannungsbegrenzung 17. Dies ist insbesondere relevant im Falle, dass das Feldgerät 1 in einer explosionsgefährdeten Atmosphäre eingesetzt werden soll.

Schließlich kann der Adapter noch über eine Recheneinheit 18 verfügen. Mit der Recheneinheit 18 kann beispielsweise die Energieversorgung der Kommunikationseinheit 13 gesteuert werden, aber auch mittels der Anschlusselemente 7a,7b, oder im Falle, dass eine bi-direktionalen Kommunikation möglich ist, ebenfalls über die Kommunikationseinheit empfangene Informationen weiterverarbeitet und -geleitet werden.

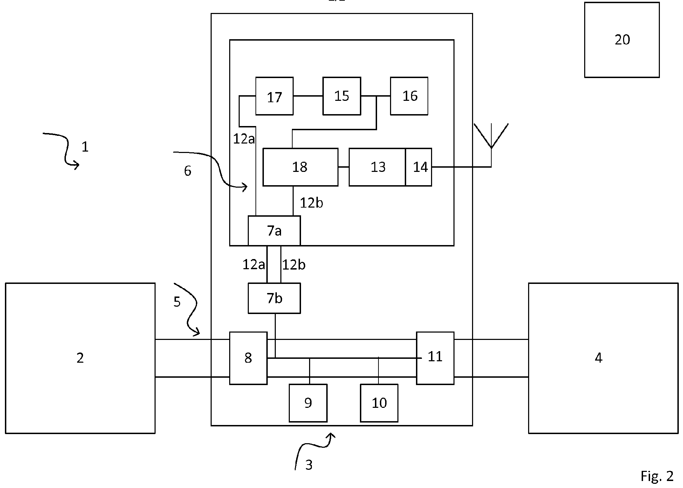

Eine zweite beispielhafte Ausgestaltung der vorliegenden Erfindung ist in Fig. 2 dargestellt. Hier ist der Adapter als integraler Bestandteil des Transmitters 3 ausgestaltet. Wie in Fig. 1, erfolgt die elektrische Anbindung des Adapters, bzw. seiner Komponenten über die Anschlusselemente 7a, 7b.

## Patentansprüche

1. Adapter (6) für ein 2-Draht-Feldgerät (1), insbesondere der Prozess und/oder Automatisierungstechnik,
wobei der Adapter (6) zumindest umfasst
- eine Kommunikationseinheit (13) zur drahtlosen, insbesondere bidirektionalen, Kommunikation mit einer externen Einheit (20),
- eine Energiespeicher-Einheit (15) zur Versorgung zumindest der Kommunikationseinheit (13) mittels elektrischer Energie, und
ein erstes bidirektionales Anschlusselement (7a) zur elektrischen Kontaktierung des Adapters (6) mit einem zweiten (7b), zu dem ersten Anschlusselement (7a) komplementären, bidirektionalen Anschlusselement des Feldgeräts (1), wobei die zumindest zwei Anschlusselemente (7a,7b) zur bidirektionalen Versorgung zumindest des Adapters (7a) mit elektrischer Energie und zum Austausch von Informationen ausgestaltet sind,
wobei es sich bei den beiden Anschlusselementen (7a, 7b) um zueinander komplementäre, serielle Schnittstellen handelt,
wobei die beiden Anschlusselemente (7a,7b) dazu ausgestaltet sind, die Versorgung zumindest des Adapters (6) mit elektrischer Energie und den Austausch von Informationen getrennt voneinander durchzuführen, wobei die Anschlusselemente (7a, 7b) zumindest zwei Kontaktelemente (12a, 12b) aufweisen, wobei ein erstes Kontaktelement für die Energieversorgung und zumindest ein zweites Kontaktelement für den Austausch von Informationen dient,
**dadurch gekennzeichnet, dass**
eine Recheneinheit (18) vorhanden ist, welche zumindest dazu ausgestaltet ist, die Versorgung der Kommunikationseinheit (13) mit elektrischer Energie über die Anschlusselemente (7a,7b) und/oder über die Energiespeicher-Einheit (15) zu steuern.

2. Adapter (6) nach Anspruch 1,
mit einer Einheit zur Strom- und/oder Spannungsbegrenzung (17).

3. Adapter (6) nach zumindest einem der vorhergehenden Ansprüche, wobei es sich bei der seriellen Schnittstelle um eine CDI, UART, i2C oder SPI-Schnittstelle, handelt.

4. Adapter (6) nach zumindest einem der vorhergehenden Ansprüche, wobei die Kommunikationseinheit (13) eine Einheit zur drahtlosen Signalübertragung (14), insbesondere ein Bluetooth-Modul, umfasst.

5. Adapter (6) nach zumindest einem der vorhergehenden Ansprüche,
mit einer Batterie (16), welche der Energieversorgung zumindest der Kommunikationseinheit (13) und/oder der Recheneinheit (18) mit elektrischer Energie dient.

6. Transmitter (3) für ein 2-Draht-Feldgerät (1), insbesondere der Prozess und/oder Automatisierungstechnik, welcher Transmitter (3) der Bestimmung und/oder Überwachung zumindest einer Prozessgröße eines Mediums dient, und welcher Transmitter (3) einen Adapter (6) nach zumindest einem der vorhergehenden Ansprüche aufweist.

7. 2-Draht-Feldgerät (1), insbesondere der Prozess- und/oder Automatisierungstechnik, umfassend einen Adapter (6) nach zumindest einem der Ansprüche 1-5 oder einen Transmitter (3) nach Anspruch 6.

## Claims

1. Adapter (6) for a 2-wire field device (1), particularly for process and/or automation engineering,
wherein the adapter (6) comprises at least
- a communication unit (13) for the wireless, particularly bidirectional, communication with an external unit (20),
- an energy storage unit (15) designed to supply electrical energy at least to the communication unit (13), and a first bidirectional connection element (7a) designed to put the adapter (6) into electrical contact with a second connection element (7b) of the field device (1), which is complementary to the first connection element (7a), wherein the at least two connection elements (7a, 7b) are designed for the bidirectional provision of power to the at least one adapter (7a) and for the exchange of information,
wherein the two connection elements (7a, 7b) are serial interfaces that are complementary to one another,
wherein the two connection elements (7a, 7b) are designed to supply electrical energy at least to the adapter (6) and to exchange information separately from one another, wherein the connection elements (7a, 7b) have at least two contact elements (12a, 12b), wherein a first contact element is used to supply energy and at least a second contact element is used to exchange information,
**characterized in that**
a computing unit (18) is provided which is designed at least to control the provision of electrical energy to the communication unit (13) via the connection elements (7a, 7b) and/or via the energy storage unit (15).

2. Adapter (6) as claimed in Claim 1,
with a unit to limit current and/or voltage (17).

3. Adapter (6) as claimed in at least one of the previous claims,
wherein the serial interface is a CDI, UART, i2C or SPI interface.

4. Adapter (6) as claimed in at least one of the previous claims,
wherein the communication unit (13) comprises a unit for wireless signal transmission (14), particularly a Bluetooth module.

5. Adapter (6) as claimed in at least one of the previous claims,
with a battery (16), which serves to supply electrical energy at least to the communication unit (13) and/or the computing unit (18).

6. Transmitter (3) for a 2-wire field device (1), particularly used in process and/or automation engineering, wherein said transmitter (3) is used to determine and/or monitor at least one process variable of a medium, and wherein said transmitter (3) has an adapter (6) as claimed in at least one of the previous claims.

7. 2-wire field device (1), particularly used in process and/or automation engineering, wherein said field device comprises an adapter (6) as claimed in at least one of the Claims 1 to 5 or a transmitter (3) as claimed in Claim 6.

## Revendications

1. Adaptateur (6) destiné à un appareil de terrain 2 fils (1), notamment de la technique des process et/ou d'automatisation,
l'adaptateur (6) comprenant au moins
- une unité de communication (13) destinée à la communication sans fil, notamment bidirectionnelle, avec une unité externe (20),
- une unité d'accumulation d'énergie (15) destinée à alimenter en énergie électrique au moins l'unité de communication (13), et un premier élément de raccordement bidirectionnel (7a) destiné à la mise en contact électrique de l'adaptateur (6) avec un deuxième élément de raccordement (7b), complémentaire au premier élément de raccordement (7a), de l'appareil de terrain (1), les au moins deux éléments de raccordement (7a, 7b) étant conçus pour l'alimentation bidirectionnelle d'au moins l'adaptateur (7a) en énergie électrique et pour l'échange d'informations,
les deux éléments de raccordement (7a, 7b) étant des interfaces série complémentaires l'une de l'autre,
les deux éléments de raccordement (7a, 7b) étant conçus pour réaliser séparément l'alimentation en énergie électrique d'au moins l'adaptateur (6) et l'échange d'informations, les éléments de raccordement (7a, 7b) présentant au moins deux éléments de contact (12a, 12b), un premier élément de contact servant à l'alimentation en énergie et au moins un deuxième élément de contact servant à l'échange d'informations,
**caractérisé**
**en ce qu'**une unité de calcul (18) est présente, laquelle unité est conçue au moins pour commander l'alimentation de l'unité de communication (13) en énergie électrique par l'intermédiaire des éléments de raccordement (7a, 7b) et/ou par l'intermédiaire de l'unité d'accumulation d'énergie (15).

2. Adaptateur (6) selon la revendication 1,
avec une unité de limitation de courant et/ou de tension (17).

3. Adaptateur (6) selon au moins l'une des revendications précédentes,
pour lequel l'interface série est une interface CDI, UART, i2C ou SPI.

4. Adaptateur (6) selon au moins l'une des revendications précédentes,
pour lequel l'unité de communication (13) comprend une unité de transmission de signaux sans fil (14), notamment un module Bluetooth.

5. Adaptateur (6) selon au moins l'une des revendications précédentes,
avec une batterie (16), laquelle sert à alimenter en énergie électrique au moins l'unité de communication (13) et/ou l'unité de calcul (18).

6. Transmetteur (3) destiné à un appareil de terrain 2 fils (1), notamment de la technique des process et/ou d'automatisation, lequel transmetteur (3) sert à déterminer et/ou à surveiller au moins une grandeur de process d'un produit, et lequel transmetteur (3) présente un adaptateur (6) selon au moins l'une des revendications précédentes.

7. Appareil de terrain 2 fils (1), notamment de la technique des process et/ou d'automatisation, lequel appareil de terrain comprend un adaptateur (6) selon au moins l'une des revendications 1 à 5 ou un transmetteur (3) selon la revendication 6.
